Europäisches Patentamt

**European Patent Office**

Office européen des brevets

(11) Publication number: **0 408 003 A2**

# EUROPEAN PATENT APPLICATION

(21) Application number: **90113262.1**

(22) Date of filing: **11.07.90**

(51) Int. Cl.5: **H04N 13/04**

(30) Priority: **11.07.89 JP 177136/89**

(43) Date of publication of application:
**16.01.91 Bulletin 91/03**

(84) Designated Contracting States:
**DE FR GB**

(71) Applicant: **KABUSHIKI KAISHA TOSHIBA**
**72, Horikawa-Cho Saiwai-ku**
**Kawasaki-shi Kanagawa-ken(JP)**

(72) Inventor: **Sudou, Hajime**
**434-12 Mutsumi**
**Gokou, Matsudo-shi, Tiba-ken(JP)**

(74) Representative: **Lehn, Werner, Dipl.-Ing. et al**
**Hoffmann, Eitle & Partner Patentanwälte**
**Arabellastrasse 4e 4**
**D-8000 München 81(DE)**

(54) **Display unit.**

(57) A display unit provides polarized images for a viewer according to video signals. The display unit comprises a polarization corrector (35, 37) for changing a polarizing direction of the images presented for the viewer.

**FIG.1**

**DISPLAY UNIT**

BACKGROUND OF THE INVENTION

1. Field of the Invention

The present invention relates to a display unit for displaying polarized images in response to video signals, and particularly to a display unit having means for optionally changing a polarizing direction of images to be presented for an observer.

2. Description of the Prior Art

A remote control robot has been developed to work for a man at a dangerous place such as a high place and a reactor where strong radiation exists. To accurately control the robot from a remote place, it is very important to grasp circumstances around the robot. For this purpose, a plurality of display units such as monitor televisions are generally employed.

Recently, a three-dimension (3-D) stereo scopic monitor has been developed to three-dimensionally grasp an object. This monitor alternately provides right and left images, and a viewer uses polarizing glasses to see the images as 3-D images.

When the viewer with the polarizing glasses observes the 3-D monitor as well as other types of display units such as liquid crystal display (LCD) units, a problem may arise. The LCD unit adjusts the color and brightness of displaying images by switching polarization and presents polarized images for the viewer. When the viewer with the polarizing glasses for seeing the 3-D monitor simultaneously sees the LCD units, the viewer may see very dark or striped images on the LCD units due to interference of the polarizing glasses and polarized LCD images. This polarization interference is particularly serious when the glasses and LCD units have the same kind of polarization, e.g., when both have linear polarization or when both have circular polarization.

The above problem will happen not only for use of the 3-D display and LCD unit but also for use of a plurality of LCD units that are not matching with each other in terms of polarization.

The polarizing characteristics of a display unit such as an LCD unit are determined at manufacturing, so that it is not easy for an end user to change the polarizing characteristics of the display unit by manipulating the inside of the unit.

Therefore, when viewing with polarizing glasses a 3-D polarizing monitor as well as a polarizing LCD unit, or a plurality of polarizing monitors, a viewer may see unclear images on the monitors.

SUMMARY OF THE INVENTION

An object of the present invention is to provide a display unit that can provide clear images irrespective of polarization.

In order to achieve the object, a display unit according to the present invention has polarization correcting means for changing a polarizing direction of polarized images formed from video signals.

Even when images are wrongly polarized to provide unclear polarized images for a viewer, the viewer can easily change a polarizing direction of the images by means of the polarization correcting means to see clear images.

Even from a plurality of display units having different polarizing directions, the viewer can always see clear images according to the present invention.

These and other objects, features and advantages of the present invention will be more apparent from the following detailed description of preferred embodiments in conjunction with the accompanying drawings.

BRIEF DESCRIPTION OF THE DRAWINGS

Fig. 1 is a schematic view showing an image displaying system involving display units according to an embodiment of the present invention;

Fig. 2 is a schematic view showing another polarization state of Fig. 1; and

Fig. 3 is a schematic view showing a display unit according to another embodiment of the present invention.

DETAILED DESCRIPTION OF THE EMBODIMENTS

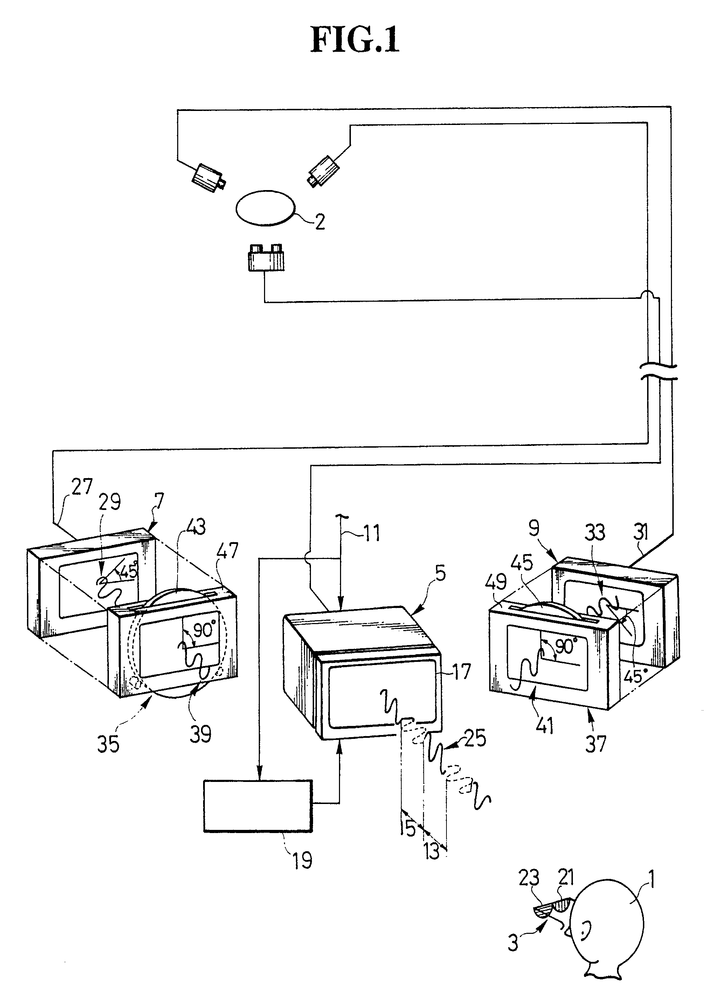

Figure 1 is a schematic view showing a first embodiment of the present invention.

In observing an object 2, a viewer 1 wears linearly polarizing glasses 3 and monitors a three-dimension (3-D) monitor 5. At the same time, the viewer 1 monitors two liquid crystal display (LCD) units 7 and 9.

The 3-D monitor 5 alternately provides a right-eye image 13 and a left-eye image 15 for every field period (for example, 1/60 seconds) of video signals 11.

A polarization switcher 17 is arranged in front of the 3-D monitor 5. The switcher 17 is controlled by a polarization switching controller 19 to linearly polarize images in synchronization with the field period.

In this embodiment, the right-eye image 13 is vertically polarized, and the left-eye image 15 is horizontally polarized. In the figure, the polarized images are shown as vertical and horizontal waves for the sake of clarity.

Right one of the polarizing glasses 3 is a vertically polarizing glass 21, and left one is a horizontally polarizing glass 23, as indicated with vertical and horizontal stripes in Fig. 1. The eyes of the viewer 1 see images on the 3-D monitor 5 through the glasses 21 and 23, respectively.

The viewer 1 alternately observes right and left images 25 in time series. When a switching period of the images 25 is sufficiently short, the viewer 1 substantially simultaneously sees a pair of the left and right images as a 3-D image.

In Fig. 1, the LCD units 7 and 9 are supplemental to the 3-D monitor 5 in observing the object 2.

Each of the LCD units 7 and 9 employs polarizing means for adjusting the color and brightness of displaying images. The LCD unit 7 receives a video signal 27 and provides a linearly-polarized image 29 inclined by $45°$ in a counterclockwise direction. The LCD unit 9 receives a video signal 31 and provides a linearly-polarized image 33 inclined by $45°$ in a clockwise direction.

If the viewer observes the images 29 and 33 with the polarizing glasses 3, the viewer may see dark images because the color and brightness of the images 29 and 33 are deteriorated due to the difference of polarization of the images 29 and 33 and glasses 3.

To cope with this, polarization correctors (polarization correcting means) 35 and 37 are disposed in front of the LCD units 7 and 9, respectively. The polarization correctors 35 and 37 vertically polarize the linearly-polarized images 29 and 33. Accordingly, corrected images 39 and 41 can pass the vertically polarizing glass 21 of the polarizing glasses 3 with no deterioration, so that the viewer 1 can observe with his right eye images having sufficient color and brightness.

The polarization correctors 35 and 37 may optionally be selected. In Fig. 1, the polarization correctors 35 and 37 comprise λ/2 wavelength plates 43 and 45 rotatably held by rotary holders 47 and 49.

Each of the λ/2 wavelength plates 43 and 45 turns linearly-polarized light around an optical axis. In this embodiment, the polarization corrector 35 can vertically polarize the linearly-polarized image 29 by manually turning the λ/2 wavelength plate 43 in a counterclockwise direction by $22.5°$. And the polarization corrector 37 can vertically polarize the linearly-polarized image 33 by manually turning the λ/2 wavelength plate 45 in a clockwise direction by $22.5°$. The corrected images 39 and 41, therefore, match a polarizing direction of the vertically polarizing glass 21 of the polarizing glasses 3.

It is possible to turn the λ/2 wavelength plates 43 and 45 to horizontally polarize the images 29 and 33, which may then match the horizontally polarizing glass 23 of the polarizing glasses 3. Namely, the λ/2 wavelength plates 43 and 45 can optionally be turned to provide images that can clearly be seen by the viewer 1.

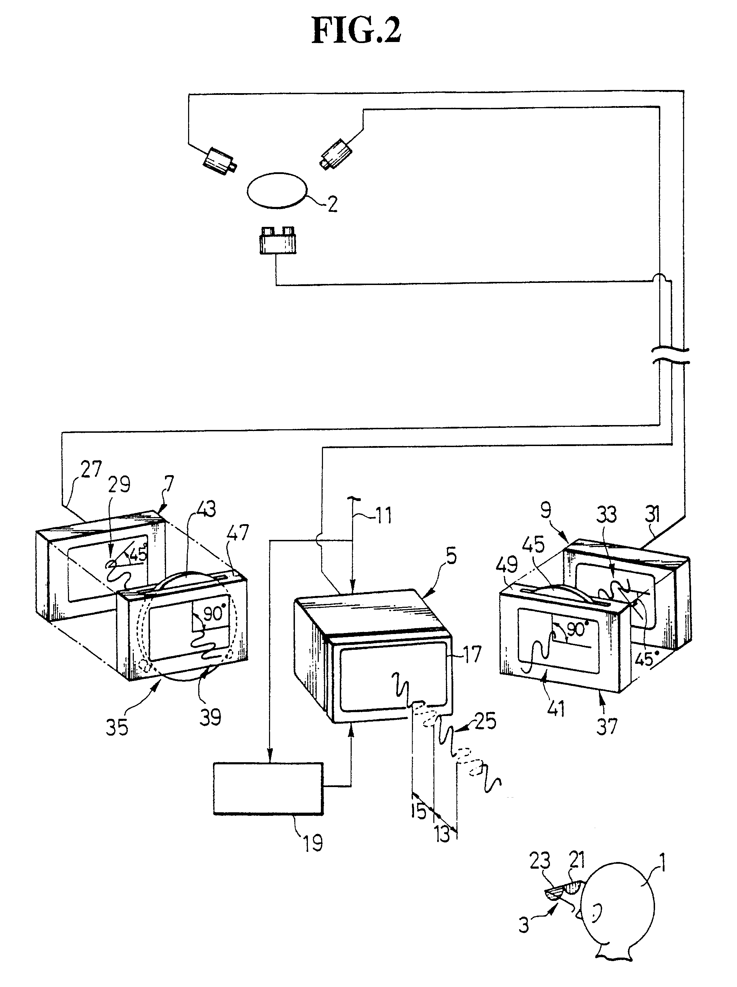

In practical use, it is preferable, as shown in Fig. 2, to horizontally polarize the linearly-polarized image 29 and vertically polarize the linearly-polarized image 33, so that the viewer 1 can see the image 39 of the LCD unit 7 with his left eye and the image 41 of the LCD unit 9 with his right eye.

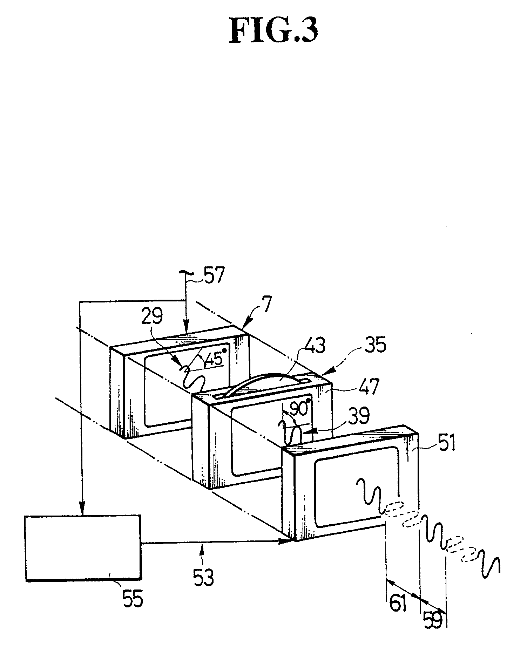

Figure 3 shows a second embodiment of the present invention. Unlike the first embodiment in which the viewer 1 observes images on the LCD units 7 and 9 only with his right eye, the second embodiment provides images that can be observed by both the eyes of the viewer 1.

In Fig. 3, an LCD unit 7 and a polarization corrector 35 are the same as those of the first embodiment. In front of or behind a λ/2 wavelength plate 43 and rotary holder 47, there is arranged a polarization switcher 51.

The polarization switcher 51 is similar to the polarization switcher 17 of the 3-D monitor 5 of the first embodiment. In response to an external signal 53, the polarization switcher 51 turns linearly-polarized light by $90°$.

A polarization switcher controller 55 drives the polarization switcher 51 in synchronization with a field period (for example, 1/60 seconds) or frame period (for example, 1/30 seconds) of video signals to alternately provide a vertically-polarized image 59 for the right eye of the viewer 1 and a horizontally-polarized image 61 for the left eye, thereby averaging load on the eyes of the viewer 1.

By applying the system of Fig. 3 for the LCD unit 7 or 9 or both of them of Fig. 1, load on the eyes of the viewer 1 can be averaged.

In the above embodiments, the LCD unit 7 or 9 is tightly attached to the polarization corrector 35 or 37. In Figs. 1 through 3, however, they are separated from one another for the sake of clarity.

The above embodiments treat linearly-polarized light. The present invention is also applicable for circularly-polarized light. If the LCD units 7 and 9 and 3-D monitor 5 of Fig. 1 all process circularly-polarized light, circularly-polarized images provided by the LCD units 7 and 9 may properly be adjusted in a similar manner to the first embodiment, thereby providing clear images.

If the LCD units 7 and 9 process circularly-polarized light and the 3-D monitor 5 linearly-polarized light, circularly-polarized images provided by the LCD units 7 and 9 may be adjusted in a manner similar to the first embodiment to provide clear images, because the circularly-polarized light and linearly-polarized light do not basically interfere with each other.

Linearly-polarized light can be converted into circularly-polarized light, or circularly-polarized light into linearly-polarized light by passing the light through a $\lambda/4$ wavelength plate. The $\lambda/4$ wavelength plate may be added to each of the polarization correctors 35 and 37 of the LCD units 7 and 9 of Fig. 1 to convert the linearly-polarized images 29 and 33 into circularly-polarized images. Thereafter, the polarization of the images is adjusted by the $\lambda/2$ wavelength plates 43 and 45. This arrangement may provide clearer images.

In the above mentioned embodiments as shown in Figs. 1 and 2, the LCD units 7 and 9 are provided as a 3-D stereo scopic monitor. However, the LCD units 7 and 9 are available for displaying letters not only the images, as a terminal of a computer. In this case, the LCD units 7 and 9 are constructed to display informations which are independent each other.

In summary, the present invention enables display units of various kinds of polarization to be used together, with causing no interference in polarization and no deterioration in the color and brightness of images presented by the display units, thereby improving reliability of and shortening remote monitoring and controlling works to be done with use of the display units.

Various modifications will become possible for those skilled in the art after receiving the teachings of the present disclosure without departing from the scope thereof.

## Claims

1. A display unit for providing polarized images for a viewer according to video signals, comprising: polarization correcting means for changing a polarizing direction of the images presented for the viewer.

2. The display unit as claimed in claim 1, wherein the display unit is a liquid crystal display unit that provides linearly-polarized images.

3. The display unit as claimed in claim 2, wherein said polarization correcting means comprises a rotatably supported $\lambda/2$ wavelength plate for changing a polarizing direction of the linearly-polarized images.

4. The display unit as claimed in claim 1, further comprising:
converting means for converting the kind of the polarization of the images presented for the viewer into another kind.

5. The display unit as claimed in claim 4, wherein the converting means comprises a $\lambda/4$ wavelength plate for converting linearly-polarized light and circularly-polarized light from one into another.

# FIG.1

# FIG.2

# FIG.3